# EUROPÄISCHE PATENTANMELDUNG

(11) **EP 1 099 504 A2**
(43) Veröffentlichungstag der Anmeldung: **16.05.2001**
(21) Anmeldenummer: 00120706.7
(22) Anmeldetag: 22.09.2000
(51) Int. Cl.: B23K 9/32, B23K 9/16

(54) **Vorrichtung zum Schutz von Schweissnähten im Wurzelbereich unter Verwendung von Schutzgas**

(30) Priorität: 10.11.1999 DE 19954812
(71) Anmelder: Gerlach, Jens-Uwe, 06122 Halle (DE)
(72) Erfinder: Gerlach, Jens-Uwe, 06122 Halle (DE)
(74) Vertreter: Pauling, Hans-Jürgen

(57) **Zusammenfassung**

Das Verschweißen kreisförmiger bzw. zylindrischer Formteile erfolgt unter Ausschluss des Luftsauerstoffes in Vakuumkammern oder Formiergaskammern, die mit Schutzgas gefüllt sind.

Bekannte Anordnungen von Fomiergaskammern bestehen aus starr oder flexibel verbundenen zylindrischen oder scheibenförmigen Dichtelementen - bei denen eine sichere Abdichtung nur bedingt gegeben ist.
Bekannt sind auch Dichtelemente in Form aufweitbarer Körper, die hydraulisch verformt werden. Die Anwendung derartiger Dichtelemente ist jedoch aufwendig.

Die neue Vorrichtung soll bei geringen Spülgasmengen und Spülzeiten universell einsetzbar sein und eine laminare Strömung des Schutzgases ermöglichen.

Die Vorrichtung besteht aus einem oder mehreren Dichtelementen in Form elastischer, aufweitbarer, kugelförmiger Hohlkörper (1,1 und 1,2) mit je einem Eingangsventil (2 und 6) sowie je einem Sintermetallformteil (4). Beide Dichtelemente sind über ein Verbindungsstück (7) verbunden.

Mit der neuen Vorrichtung wird eine sichere Abdichtung des mit Schutzgas gefüllten abgekammerten Raumes erreicht, wobei Turbulenzen des Schutzgases vermieden werden.
Neben einfacher Handhabung werden kurze Spülzeiten erreicht.

## Beschreibung

Die Erfindung betrifft eine Vorrichtung zum Schutz von Schweißnähten im Wurzelbereich unter Verwendung von Schutzgas (Formieren) insbesondere beim Verschweißen kreisförmiger oder zylindrischer Formteile.

Beim Verschweißen kreisförmiger bzw. zylindrischer Formteile wie z.B. Bögen, Rohre, Abzweigungen, Reduzierungen oder Flansche, miteinander entstehen Oxidationen, welche auf den ungehinderten Zugriff des Luftsauerstoffes während des Schweißens zurückzuführen sind. Dies kann zu Qualitätseinbußen durch Zunder, Oxidschichten oder zu Korrosion und Porenbildung führen.
Um den Schutz und die Formung der Unterseite von Schweißnähten an metallischen, ferritischen und austenitischen, insbesondere hochlegierten Stählen durch geeignete inerte Gase zu gewährleisten, muss eine weitgehend sauerstofffreie Atmosphäre geschaffen werden. Dabei ist es von großer Bedeutung, vor und während aller thermischen Bearbeitungsvorgänge, wie Heftschweißen oder Herstellen von Schweißnähten, die genannte Schutzgasatmosphäre sicherzustellen.

Möglichkeiten zur Schaffung solcher sauerstofffreien Räume bestehen darin, die zu verschweißenden Bauteile in einer Vakuumkammer oder in sogenannten Formiergaskammern zu verschweißen. Hierbei werden begrenzte Räume mit Schutzgasen derart befüllt, das die Umgebungsluft aus dem Bereich von zu verschweißenden Rohren oder anderen Formteilen vollständig verdrängt bzw. eine ausreichend hohe Konzentration von Formiergas geschaffen wird.

Bekannte Formiergaskammern bestehen im wesentlichen aus zwei miteinander starr oder flexibel verbundenen zylindrischen oder scheibenförmigen Dichtelementen, an denen eine Schutzgaszufuhreinrichtung und mindestens ein Gasauslasskanal vorgesehen sind. Sie werden in den Rohren oder Formteilen so plaziert, dass sich die Fügestelle zwischen den Dichtelementen befindet. Über eine Öffnung wird dann Formiergas zugeführt und es soll durch Vermischung oder Verdrängung mit der sich in der Kammer noch befindlichen Umgebungsluft die gewünschte Schutzgasatmosphäre entstehen. Ein erneutes Eindringen von Luftsauerstoff soll durch den im abgekammerten Bereich entstehenden Überdruck vermieden werden (vgl. DE 3728184 C2; EP 0116687; DE G9107465.7 und DE G9111285.0).
Diese Systeme haben jedoch den Nachteil, dass ein sicheres Abdichten auch durch mehrere Dichtlippen nur bedingt gegeben ist. Für starre Dichtelemente besteht zudem die Gefahr des Verkantens.

Weiterhin sind aus dem Stand der Technik Dichtelemente in Form aufweitbarer Körper oder Ballons bekannt (vgl. DE 2454774; SU 1745473 A1; JP 08309529 A und JP 10024367 A). In der JP 58077772 A werden ferner Dichtelemente aus hydraulisch verformbaren elastischen kugelförmigen Körpern beschrieben. Hier werden über ein separates hydraulisches Drucksystem Abdichtelemente verformt und zusätzlich Schutzgas zugeführt. Die Vorbereitungen zum Einsatz dieser Systeme gestalten sich aufwendig und zeitraubend und es besteht auch die Möglichkeit des Austrittes von Flüssigkeiten bzw. Ölen.

Der Erfindung liegt das Problem zugrunde, eine Vorrichtung zum Schutz von Schweißnähten im Wurzelbereich unter Verwendung von Schutzgas zu entwickeln, die universell einsetzbar ist, eine laminare Strömung des Schutzgases gewährleistet, einfach zu handhaben ist und zudem die Spülgaszeiten und Spülgasmengen gering hält.

Dieses Problem wird gemäß Patentanspruch dadurch gelöst, dass die Vorrichtung aus einem oder mehreren Dichtelementen und einem Verbindungsstück besteht, die durch folgende Merkmale gekennzeichnet sind:
a) Die Dichtelemente sind aufweitbare kugelförmige Hohlkörper aus hitzebeständigen Polymeren und/oder Elastomeren;
b) Das Dichtelement 1,1 enthält ein Eingangsventil 2 und ein weiteres Ventil 3 mit einem Sintermetallformteil 4 und eine Gasaustrittsöffnung 5 ;
c) Das Dichtelement 1,2 weist ein Eingangsventil 6 , mit einem Sintermetallformteil 4 , auf;
d) Das Verbindungsstück 7 ist rohrförmig, flexibel und in variablen Längen ausgebildet.

Die erfindungsgemäße Vorrichtung ermöglicht, durch einen mit Schutzgas befüllbaren abgekammerten Raum, den Schutz von Schweißnähten im Wurzelbereich und damit die Vermeidung von Anlauffarben und Qualitätseinbußen durch Zunder, Oxidschichten, Korrosion u.ä.. Die neue Vorrichtung gestattet eine sichere Abdichtung und im Inneren der Kammer werden Turbulenzen des Schutzgases durch die Gestaltung der Dichtelemente vermieden. Die Vorrichtung ist so konzipiert, dass sie den Maßtolerenzen unterschiedlicher Abmessungen von Rohrleitungen und Formteilen angepasst werden kann. Neben der einfachen Handhabbarkeit werden kurze Spülzeiten erreicht. Weiterhin ist die Anwendung zusätzlicher Werkzeuge und Hilfsmittel nicht erforderlich.

Weitere Einzelheiten, Vorteile und Merkmale der Erfindung ergeben sich nicht nur aus dem Patentanspruch und den daraus zu entnehmenden Merkmalen für sich und/oder in Kombination mit der nachfolgenden Beschreibung eines der Zeichnung zu entnehmenden Ausführungsbeispiels.

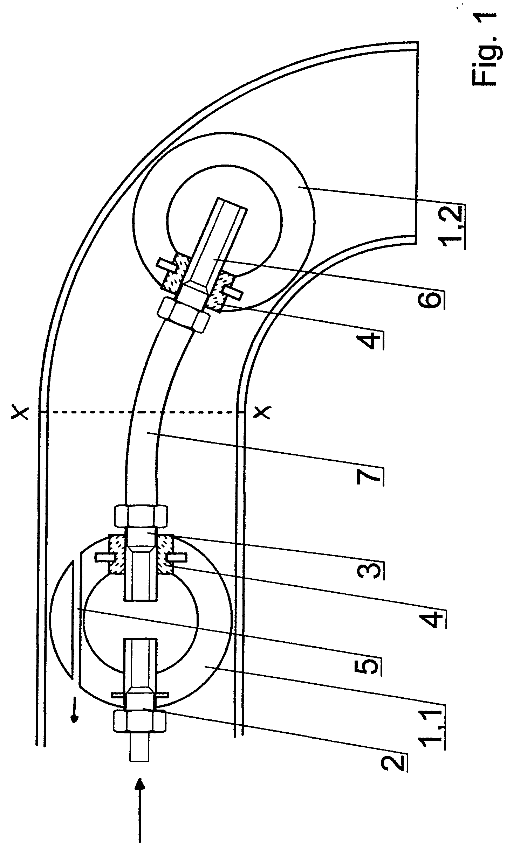

Figur 1 zeigt eine schematische Darstellung eines Ausführungsbeispieles.
Es soll eine Rohrleitung mit einem üblichen Rohrbogen verschweißt werden. Die vorgesehene Schweißnaht ist in der Figur 1 mit XX gekennzeichnet.

Der Schutz der Schweißnähte im Wurzelbereich erfolgt durch einen abgekammerten Raum bestehend aus zwei Dichtelementen 1,1 und 1,2 und den Wandungen der Rohrleitung bzw. des Rohrbogens. Die Dichtelemente sind aufweitbare, kugelförmige Hohlkörper aus hitzebeständigen Elastomeren. Es können auch Hohlkörper aus hitzebeständigen geeigneten Polymeren verwendet werden. Dabei weist das Dichtelement 1,1 ein Eingangsventil 2 für das Schutzgas und ein weiteres Ventil 3 mit einem Sintermetallformteil 4 und eine Gasaustrittsöffnung 5 auf. Das Ventil 3 des Dichtelementes 1,1 ist verbunden mit einem Ende eines rohrförmigen, flexiblen Verbindungsstückes 7. Das andere Ende dieses Verbindungsstückes 7 ist über das Eingangsventil 6 mit dem Dichtelement 1,2 verbunden. Dabei weist das Eingangsventil 6 ebenfalls ein Sintermetallformteil 4 auf. Das Verbindungsstück 7 ist in variablen Längen ausgebildet und von Metallgeflecht umsponnen.
Die verwendeten Dichtelemente sind dabei im drucklosen Zustand wenige Millimeter kleiner als der Innendurchmesser der Rohrleitung und des Rohrbogens.

Die erfindungsgemäße Vorrichtung wird wie folgt installiert und verwendet.
Zuerst wird ein Schutzgasschlauch durch eines der zu verschweißenden Teile eingeführt und mit dem Schutzgasbehälter verbunden. Nachfolgend wird über das Eingangsventil 2 das Dichtelement 1,1 mit dem Schutzgasschlauch gekoppelt. Das Dichtelement 1,2 wird durch das Verbindungsstück 7 über das Eingangsventil 6 verschraubt. Dadurch werden die Ventile 3 und 6 über einen im Schraubanschluss des Verbindungsstückes befindlichen Druckstift geöffnet. Die Formiergaskammer kann nun einfach in ausreichendem Abstand zur Schweißstelle positioniert und das Schutzgas zugeführt werden. Durch die Gaszufuhr wird in den Dichtelementen 1,1 und 1,2 ein Druck aufgebaut und sie werden verformt bis zum sicheren Anschluss im Inneren des Rohrbogens bzw. der Rohrleitung. Gleichzeitig strömt Schutzgas durch die gasdurchlässigen Sintermetallformteile 4 zur Schweißstelle. Hier bildet sich die gewünschte Schutzgasatmosphäre aus und der Schweißprozess kann begonnen werden. Durch die Gasaustrittsöffnung 5 wird das Schutzgas gleichmäßig aus diesem Kammerbereich abgeführt und ein unerwünschter Druckaufbau zwischen den Dichtelementen vermieden.
Die Sintermetallformteile 4 sind dabei in ihrer Gasdurchlässigkeit so konzipiert, dass Teilchengröße und -form des verwendeten Metallpulvers ausreichend ist, um einen Druck in den Dichtelementen zu erzeugen, der diese verformen kann und gleichzeitig die Kammer mit Schutzgas flutet und eine laminare Strömung in der Kammer sichert.
Nach Beendigung der Schweißarbeiten und einer entsprechenden Abkühlungsphase wird die Schutzgaszufuhr gestoppt. Die Dichtelemente gehen aufgrund ihrer Elastizität und des Druckausgleiches durch die Sintermetallformteile wieder in ihre ursprüngliche Größe zurück und werden mit Hilfe des Schutzgasschlauches aus dem Rohr entfernt.

## Patentansprüche

1. Vorrichtung zum Schutz von Schweißnähten im Wurzelbereich unter Verwendung von Schutzgas, bestehend aus einem oder mehreren Dichtelementen und einem Verbindungsstück, gekennzeichnet durch folgende Merkmale:
a) Die Dichtelemente 1,1 und 1,2 sind elastische, aufweitbare, kugelförmige Hohlkörper aus hitzebeständigen Polymeren und/oder Elastomeren;
b) Das Dichtelement 1,1 enthält ein Eingangsventil 2 und ein weiteres Ventil 3 mit einem Sintermetallformteil 4 und eine Gasaustrittsöffnung 5 ;
c) Das Dichtelement 1,2 weist ein Eingangsventil 6 mit einem Sintermetallformteil 4 auf;
d) Das Verbindungsstück 7 ist rohrförmig, flexibel und in variablen Längen ausgebildet.
